# EUROPÄISCHE PATENTSCHRIFT

(11) **EP 2 130 002 B1**
(45) Veröffentlichungstag und Bekanntmachung des Hinweises auf die Patenterteilung: **08.05.2019**
(21) Anmeldenummer: 08717972.7
(22) Anmeldetag: 18.03.2008
(51) Int. Cl.: G01F 1/58, G01F 1/60

(54) **VERFAHREN ZUM BETREIBEN EINES MAGNETISCH-INDUKTIVEN DURCHFLUßMEßGERÄTS**
METHOD FOR OPERATING A MAGNETIC-INDUCTIVE FLOW METER
PROCÉDÉ POUR FAIRE FONCTIONNER UN APPAREIL DE MESURE DE DÉBIT À INDUCTION MAGNÉTIQUE

(30) Priorität: 28.03.2007 DE 102007015368
(43) Veröffentlichungstag der Anmeldung: 09.12.2009
(73) Patentinhaber: Endress+Hauser Flowtec AG, 4153 Reinach (CH)
(72) Erfinder: DRAHM, Wolfgang, 85435 Erding (DE); SCHMALZRIED, Frank, 85356 Freising (DE)
(74) Vertreter: Andres, Angelika Maria
(86) Internationale Anmeldenummer: PCT/EP2008/053240
(87) Internationale Veröffentlichungsnummer: WO 2008/116798

(56) Entgegenhaltungen:
- EP-A- 0 521 448
- EP-A- 1 273 892
- WO-A-01/90702
- WO-A-96/37758
- WO-A-2004/109416
- GB-A- 2 324 606

## Beschreibung

Die Erfindung betrifft ein Verfahren zum Betreiben eines magnetisch-induktiven Durchflußmeßgeräts. Im besonderen betrifft die Erfindung eine Verfahren zum Ermitteln eines Strömungstyps eines durch den Durchflußmeßgeräts strömenden Mediums.

In der industriellen Prozeß-Meßtechnik werden zur Messung von elektrisch leitfähigen Medien, oftmals, insb. auch im Zusammenhang mit der Automatisierung chemischer und/oder verfahrenstechnischer Prozesse, Durchfluß mit einem magnetisch-induktiven Durchflußaufnehmer eingesetzt. Mit magnetisch-induktiven Durchflußmeßgeräten läßt sich bekanntlich primär eine zeitlich veränderliche Strömungsgeschwindigkeit und/oder ein zeitlich veränderlicher Volumen-Durchfluß einer elektrisch leitenden Flüssigkeit praktisch direkt messen und in entsprechende Primär-Meßwerte abbilden. Aufbau und Wirkungsweise magnetisch-induktiver Durchflußmeßgeräte sind dem Fachmann an und für sich bekannt und beispielsweise in der DE-A 43 26 991, der EP-A1 275 940, der EP-A 12 73 892, der EP-A 1 273 891, der EP-A 814 324, der EP-A 770 855, der EP-A 521 169, der US-B 69 62 087, der US-B 69 73 839, der US-B 66 34 238, der US-A 60 31 740, der US-A 54 87 310, der US-A 52 10 496, der US-A 44 10 926, der US-A 2002/0117009 oder der WO-A 01/90702 ausführlich und detailiert beschrieben.

Durchflußaufnehmer der beschriebene Art weisen üblicherweise jeweils ein nicht-ferromagnetisches Messrohr auf, das in den Verlauf einer im Betrieb das zu messenden Medium führende Rohrleitung flüssigkeitsdicht, z.B. mittels Flanschen oder Verschraubungen, eingesetzt und entsprechend vom Medium durchströmt ist. Der Medium berührende Teil des Meßrohrs ist im allgemeinen elektrisch nicht-leitend ausgebildet, damit eine Meßspannung nicht kurzgeschlossen wird, die nach dem Faraday'schen Induktionsgesetz von einem das Meßrohr zumindest abschnittsweise mit zeitlich veränderlicher Intensität durchsetzenden Magnetfeld im Medium induziert wird. Metall-Meßrohre sind daher üblicherweise innen mit einer elektrisch nicht-leitenden Schicht, z.B. aus Hartgummi, Polyfluorethylen oder einem auch anderen Kunststoff. Bei vollständig aus einem Kunststoff oder aus einer Keramik, beispielsweise aus einer Aluminiumoxid-Keramik, bestehenden Meßrohren ist die elektrisch nicht-leitende Schicht demgegenüber nicht erforderlich.

Das Magnetfeld wird mittels eines entsprechenden Magnetsystem erzeugt und in das strömenden Medium entsprechend eingekoppelt, wobei solch ein Magnetsystem zumeist mittels zweier einander diametral gegenüberliegenden außen am Meßrohr plazierten Feldspulen gebildet ist. Falls erforderlich, weisen Feldspulen der beschriebenen Art der Magnetfeldführung dienende Spulenkern aus magnetisch leitfähigem Material auf. Damit das von den Spulen erzeugte Magnetfeld möglichst homogen ist, sind die Spulen zumeist einander identisch und elektrisch in Serie geschaltet, sodaß sie im Betrieb vom selben Erregerstrom durchflossen werden können. Es ist jedoch auch schon beschrieben worden, die Feldspulen abwechselnd gleich- bzw. gegensinnig von einem Erregerstrom durchfließen zu lassen, um dadurch beispielsweise die Viskosität von Flüssigkeiten, deren Fließindex und/oder einen Turbulenzgrad der Strömung ermitteln zu können, vgl. hierzu auch die EP-A1 275 940, die EP-A 770 855 oder die DE-A 43 26 991. Der vorgenannte Erregerstrom wird von einer entsprechenden Betriebs-Elektronik des Durchflußmessers erzeugt, kann z.B. als getakteter, gepulster oder harmonischer Wechselstrom ausgebildet sein. Für das Erzeugen von getakteten Errgerströmen werden üblicherweise als Rechteck-Modulatoren wirkenden, beispielsweise als T- oder H-Schaltung ausgebildete Schaltwerke verwendet, die von einem üblicherweise auf konstante Amplitude geregelten Strom durchflossen werden.

Die erwähnte induzierte Meßspannung wird mittels mindestens zwei galvanischen, also das zu messenden Medium kontaktierenden, oder kapazitiven, also z.B. innerhalb der Rohrwand des Meßrohrs angeordneten, Meßelektroden abgegriffen. Im häufigsten Fall sind die Meßelektroden diametral einander gegenüberliegend so angeordnet, dass ihr gemeinsamer Durchmesser senkrecht zur Richtung des Magnetfelds und somit senkrecht zu jenem Durchmesser ist, auf dem sich die Feldspulen gegenüber liegen. Die induzierte Meßspannung wird mittels einer geeigneten Signalverarbeitungsschaltung des Durchflußmessers abgenommen, entsprechend verstärkt und zu einem weitgehend konditionierten Meßsignal aufbereitet, das seinerseits entsprechend weiterverarbeitet, beispielsweise digitalisert, werden kann. Entsprechende Signalverarbeitungsschaltung sind dem Fachmann ebenfalls bekannt, beispielsweise aus der EP-A 814 324, der EP-A 521 169 oder der WO-A 01/90702.

Im Prinzip ist der Absolutwert des momentanen Potentials an der jeweiligen Meßelektrode für die Messung des Volumen-Durchflußes ohne Bedeutung, allerdings nur unter der Voraussetzung, dass einerseits die Potentiale im Aussteuerbereich eines auf die Meßelektroden folgenden Differenzverstärkers liegen, d.h. also dass dieser Verstärker von den Potentialen nicht übersteuert werden darf, und dass andererseits sich die Frequenz von Potentialänderungen wesentlich von der Frequenz der erwähnten Stromrichtungsumkehr unterscheidet.

Das Potential an jeder Elektrode ist sind nicht nur von Ausprägungen des Meßrohrs und des Magnetfeldssystems abhängig, sondern es können, wie bereits in der US-B 67 08 569 oder auch in der US-B 66 34 238 diskutiert, jedem der Potentiale und insoweit auch dem eigentlichen Meßsignal nahezu unvermeidlich Störungen verschiedener Genese überlagert sein. Solche Störungen des Meßsignals können beispielsweise durch induktive und/oder kapazitive Einstreuungen in die Meßleitungen oder Beläge auf den Meßelektroden bedingt sein.

Neben solchen eher dem Anrege- und Meßkanal zu zuordnenden Störungen ist ferner davon auszugehen, daß auch der Strömungstyp des im Meßrohr befindlichen Mediums selbst einen erheblichen Einfluß auf die Ausprägung des Meßsignals und Abweichungen von dem kalibrierten und insoweit spezifizierten Strömungsverhältnissen ebenfalls als eine erhebliche Strörung des Meßsignals anzusehen ist. Eine erste Art von strömungstypbedingten Störungen stammt im Falle fremdstoffbeladener Medien u.a. von mitgeführten Feststoffpartikeln und/oder von Gasblasen, und treten dann auf, wenn solche Fremdstoffe auf wenigstens eine der Meßelektroden auftreffen bzw. in unmitelbarer Nähe vorbeiströmen und plötzliche Änderungen des lokalen Potentials bewirken. Die Abklingzeit dieser Änderungen ist von der Art des Mediums abhängig und zumeist auch größer als die Anstiegszeit der Änderungen. Eine zweite Art von strömungstypbedingten Störungen des Meßsignals läßt sich, wie beispielsweise auch in der DE-A 43 26 991 diskutiert, auf Asymmetrien im zunächst als symmetrisch vorausgesetzten Strömunsgprofil zurückführen. Infolge vorgenannter Störungen ist letzlich davon auszugehen, daß das Meßsignal nicht nur einen im wesentlichen mit einer momentanen Strömungsgeschwindigkeit des Mediums korrespondierenden Nutzanteil sondern zumeist auch einen zumindest anteilig von aktuellen Störungen im strömenden Medium beeinflußten Rauschanteil aufweist, der wiederum in erheblichem Maße zur Verschlechterung des Meßergebnisses beitragen kann.

In der EP-A 1 273 892 ist ein Verfahren zum Betrieb eines magnetisch-induktiven Durchflußaufnehmers vorgeschlagen, wobei Störpotentiale an den Meßeleketroden, insb. auch solche von strömungstypbedingter Natur, dadurch eleminiert oder zumindest deren Wirkung deutlich verringert werden, daß an wenigstens eine der beiden Meßelektroden mittels der Auswerte- und Betriebsschaltung erzeugte Spannungsimpulse zumindest zeitweise angelegt werden. Die Anwendung dieses Verfahrens kann vornehmlich bei ein-phasigen oder auch bei gut durchmischten mehr-phasigen Flüssigkeiten zu einer erheblichen Verbesserung der Meßgenauigkeit von magnetisch-induktiven Durchflußmessern führen. Darüber hinaus sind beispielsweise in der EP-A 337 292 oder der WO-A 03/004977 Verfahren beschrieben, bei denen die Meßelektroden, insb. durch taktweises Kurzschließen gegen Masse oder durch Anlegen einer harmonischen Wechselspannung, über einen längeren Zeitraum mit einer Ströpotentiale beseitigenden Löschspannung beaufschlagt werden. Allerdings besteht ein Nachteil des vorbeschriebenen Meßverfahrens bzw. entsprechender Durchflußaufnehmer aber darin, daß beispielsweise bei mehr-phasigen Flüssigkeiten mit ausgeprägter Trennung der einzelnen Flüssigkeitsphasen oder bei breiig-zähen Flüssigkeiten mit einer eher stochastischen, vorab praktisch nicht mehr sinnvoll abschätzbaren und somit auch kaum mehr kalibrierbaren Verteilung und/oder Auftreff-Häufigkeit der allfällig mitgeführten Fremdstoff-Partikel oder Gasbläschen zu rechnen ist. In entsprechendem Maße können so zumindest Störpotentiale strömunsgtypbedingeter Natur nicht mehr in ausreichend sicherem Maße von den Meßelektroden entfernt werden. Damit einhergehend kann sich die Meßgenauigkeit des Meßgeräts, insb. mit zunehmender Konzentration der Fremdstoff-Partikel und/oder Gasbläschen, durchaus beträchtlich verschlechtern.

Es ist daher eine Aufgabe der Erfindung, ein Verfahren anzugeben, mit dem in die Meßsignale von magnetisch-induktiven Durchflußmessaufnehmern eingekoppelte, insb. auch durch den Strömungstyp oder abrupten Änderungen desselben bedingte, Störpotentiale zumindest sicher erkannt und entsprechend signalisiert werden können, gegebnfalls inform eines Alarms. Zudem soll der Einfluß nämlicher Störpotentiale auf die Ermittlung der primären Meßwerte möglichst auch soweit kompensiert werden, daß die primären Meßwerte auch bei asymmetrischem Strömunsprofil und/oder bei mehrphasigem Fluid oder Änderungen von dessen Zusammensetzung und/oder dessen Fließindex sehr präzise und als nach wie vor verläßlich anzusehen sind.

Die Aufgabe wird durch das Verfahren gemäss Anspruch 1 gelöst.

Zur Lösung dieser Aufgabe besteht die Erfindung in einem Verfahren zum Betreiben eines magnetisch-induktiven Durchflußmessers, wobei Verfahren folgende Schritte umfaßt:
- Strömenlassen eines zu messenden Mediums durch ein Meßrohr des Durchflußmessers;
- Erzeugen eines das Medium im Meßrohr zumindest abschnittsweise mit zeitlich veränderlicher Intensität durchdringenden, insb. getakteten, Magnetfelds in der Weise, daß im Medium zumindest zeitweise, insb. taktweise, eine Meßspannung induziert wird;
- zumindest zeitweises, insb. taktweises, Abgreifen der im Medium induzierten Meßspannung mittels eines von einer ersten und einer zweiten Meßelektrode gebildeten Elektrodenpaars zum Erzeugen wenigstens eines mit der Meßspannung korrespondierenden analogen Meßsignals, wobei das Meßsignal einen im wesentlichen mit einer momentanen Strömungsgeschwindigkeit des Mediums korrespondierenden Nutzanteil sowie einen zumindest anteilig von aktuellen Störungen im strömenden Medium beeinflußten Rauschanteil aufweist; und
- Ermitteln eines Strömungstyps des im Meßrohr befindlichen Mediums, der durch ein momentanes Strömungsprofil und/oder eine momentane Zusammensetzung des strömenden Mediums bestimmt ist.

Ferner umfaßt beim erfindungsgemäßen Verfahren der Schritt des Ermitteins des Strömungstyps folgende weiteren Schritte:
- Erzeugen eines das wenigstens eine Meßsignal repräsentierenden Digitalsignals;
- Ermitteln eines zumindest überwiegend mit dem Rauschanteil korrespondierenden, insb. bandbegrenzten, Rauschspektrums des Meßsignals unter Verwendung des Digitalsignals; und
- Ermitteln wenigstens eines den im Meßrohr vorliegenden Strömungstyp zumindest qualitativ, insb. möglichst zeitnah, signalisierenden Zustandswerts unter Verwendung zumindest eines Teils des Rauschspektrums, wobei der Schritt des Ermittelns des Rauschspektrums des Meßsignals weiters einen Schritt des Ermittelns eines sowohl mit dem Rausch- als auch mit dem Nutzanteil des Meßsignals korrespondierenden Nutz-/Rauschspektrums des Meßsignals unter Verwendung des Digitalsignalssowie einen Schritt des Entfernens eines zumindest überwiegend mit dem Nutzanteil korrespondierenen Nutzspektrums des Meßsignals vom Nutz-/ Rauschspektrums umfaßt. Dabei ist ferner vorgesehen, daß zum Entfernen des Nutzspektrums vom Nutz-/ Rauschspektrum letzteres einer Medianfilterung unterzogen wird.

Nach einer ersten Ausgestaltung des Verfahrens der Erfindung umfaßt der Schritt des Ermitteins des Rauschpektrums des Meßsignals weiters einen Schritt des Separierens von Nutz- und Rauschanteil.

Nach einer zweiten Ausgestaltung des Verfahrens der Erfindung ist vorgesehen, daß das Separieren von Nutz- und Rauschanteil zumindest anteilig unter Verwendung des Digitalsignals erfolgt.

Nach einer dritten Ausgestaltung des Verfahrens der Erfindung umfaßt der Schritt des Ermittelns des Rauschspektrums des Meßsignals weiters einen Schritt des Speicherns wenigstens eines Teils der digitalen Abtastfolge zum Erzeugen eines Datensatzes umfaßt, der einen zeitlichen Verlauf des Meßsignals innerhalb eines vorgebbaren Zeitintervalls momentan repräsentiert.

Nach einer vierten Ausgestaltung des Verfahrens der Erfindung ist vorgesehen, daß der Schritt des Ermittelns des wenigstens einen Zustandswerts einen Schritt des Ermittelns einer spektralen Leistungsdichte zumindest des Rauschanteils des Meßsignals umfaßt. Gemäß einer Weiterbildung dieser Ausgestaltung der Erfindung erfolgt die Ermittlung der spektrale Leistungsdichte zumindest des Rauschanteils des Meßsignals unter Verwendung wenigstens eines Teils des Rauschspektrums.

Nach einer fünften Ausgestaltung des Verfahrens der Erfindung ist vorgesehen, daß der Schritt des Ermitteins des wenigstens einen Zustandswerts einen Schritt des Ermittelns wenigstens eines Modell-Parameters für das Meßsignal umfaßt, der eine Signaleigenschaft des Rauschanteils innerhalb des gesamten Rauschspektrums aktuell repräsentiert. Nach einer Weiterbildung der Erfindung umfaßt der Schritt des Ermitteins des wenigstens einen Zustandswerts weiters einen Schritt des Vergleichens des Modell-Parameters mit einem dafür vorgegebenen Modell-Referenzwert und/oder repräsentiert der wenigstens eine Modell-Parameter eine spektrale Leistungsdichte des Rauschanteils.

Nach einer sechsten Ausgestaltung des Verfahrens der Erfindung ist vorgesehen, daß das Rauschspektrum ein unterhalb einer aktuellen, insb. veränderlichen und/oder vom Strömungstyp des Mediums beeinflußten, Referenzfrequenz liegendes unteres Frequenzteilband, innerhalb dem der Rauschanteil einen vorgegebene Mindestpegel aktuell zumindest im Mittel überschreitet, sowie ein oberhalb der Referenzfrequenz liegendes oberes Frequenzteilband, innerhalb dem der Rauschanteil den vorgegebenen Mindestpegel aktuell zumindest im Mittel unterschreitet, aufweist. Nach einer Weiterbildung dieser Ausgestaltung der Erfindung umfaßt der Schritt des Ermittelns des wenigstens einen Zustandswerts einen Schritt des Ermittelns aktuellen Referenzfrequenz und/oder umfaßt der Schritt des Ermittelns des wenigstens einen Zustandswerts weiters einen Schritt des Ermittelns wenigstens eines das obere Frequenzteilband vom unteren Frequenzteilband unterscheidbar repräsentierenden Modell-Parameters und gegebenenfalls zudem auch einen Schritt des Vergleichens des aktuellen Modell-Parameters mit einem dafür vorgebenen Referenzwert. Der wenigstens eine Zustandswert kann unter Verwendung der aktuellen Referenzfrequenz und des das obere Frequenzteilband repräsentierenden Modell-Parameters ermittelt werden und bei dem wenigstens einen Modell-Parameter kann es sich um einen Gradientenwert handeln, der eine frequenzabhängige Veränderung einer spektralen Amplitudendichte des Rauschanteils repräsentiert.

Nach einer siebenten Ausgestaltung des Verfahrens der Erfindung ist vorgesehen, daß das Rauschspektrum bandbegrenzt ist.

Nach einer achten Ausgestaltung des Verfahrens der Erfindung umfaßt dieses weiters einen Schritt des Unterziehens zumindest eines Abschnitts des Digitalsignals einer diskrete Fouriertransformation.

Nach einer neunten Ausgestaltung des Verfahrens der Erfindung ist vorgesehen, daß der Schritt des Ermittelns des Rauschspektrums des Meßsignals weiters einen Schritt des Unterziehens zumindest eines Abschnitts des Digitalsignals einer diskrete Fourriertransformation umfaßt.

Nach einer Weiterbildung dieser Ausgestaltung der Erfindung umfaßt der Schritt des Ermittelns des Rauschpektrums des Meßsignals weiters einen Schritt des Ermittelns eines zumindest überwiegend mit dem Nutzanteil korrespondierenen Nutzspektrums des Meßsignals anhand des Digitalsignals.

Nach einer zehnten Ausgestaltung des Verfahrens der Erfindung ist vorgesehen, daß der Zustandswert signalisert, daß das Medium wenigstens eine fluide Phase aufweist.

Nach einer elften Ausgestaltung des Verfahrens der Erfindung ist vorgesehen, daß der Zustandswert signalisert, daß das Medium im wesentlichen einphasig ist.

Nach einer zwölften Ausgestaltung des Verfahrens der Erfindung ist vorgesehen, daß der Zustandswert signalisert, daß das Medium mehrphasig ist, beispielsweise im wesentlichen zweiphasig und/oder das ein solches mit im wesentlichen zwei fluide Phasen. Ferner kann der Zustandswert so ausgebildet sein, daß er signalisert, daß das Medium zumindest eine gasförmige Phase und eine flüssige Phase aufweist.

Nach einer dreizehnten Ausgestaltung des Verfahrens der Erfindung umfaßt dieses weiters einen Schritt des Erzeugens wenigstens eines Meßwerts, der eine vom zu messenden Medium zu erfassende Meßgröße quantitativ repräsentiert, unter Verwendung des Meßsignals. Nach einer Weiterbildung dieser Ausgestaltung der Erfindung wird der Meßwert unter Verwendung auch des Digitalsignals erzeugt, insb. auch unter Verwendung des Zustandswerts.

Nach einer vierzehnten Ausgestaltung des Verfahrens der Erfindung umfaßt dieses weiters einen Schritt des Vergleichens des Zustandswerts mit wenigstens einem vorgegebenen Zustandsreferenzwert, der einen, insb. für einen gesicherten Betrieb und/oder eine vorgegebene Meßgenauigkeit des Durchflußmessers erforderlichen, vorgegebenen Strömungstyp des Mediums repräsentiert. Nach einer Weiterbildung dieser Ausgestaltung der Erfindung umfaßt dieses weiters einen Schritt des Auslösens eines Alarms basierend auf einem Vergleich des Zustandswerts mit wenigstens einem vorgegebenen Zustandsreferenzwert, wobei der Alarm, insb. visuell und/oder akustisch wahrnehmbar, signalisiert, daß der aktuell ermittelte Strömungstyp vom vorgegebenen Strömungstyp abweicht.

Nach einer fünfzehnten Ausgestaltung des Verfahrens der Erfindung ist vorgesehen, daß der Schritt des Erzeugens eines das Medium im Meßrohr zumindest abschnittsweise mit zeitlich veränderlicher Intensität durchdringenden, insb. getakteten, Magnetfelds einen Schritt des Fließenlassens eines elektrischen, insb. bi-polaren, Erregerstroms durch eine Betriebsschaltung des Durchflußmessers sowie ein daran zumindest temporär angeschlosses, am Meßrohr angeordnetes Magnetfeld-System.

Ein Grundgedanke der Erfindung besteht darin, den teilweise in hohem Maße veränderlichen Strömungstyp des im Meßrohr befindlichen Medium anhand von damit korrespondierenden Störpotentalen im wenigstens einen Meßsignal zu detektieren. Dafür wird anhand eines mit den Störpotentialen korrespondierenden, vom Nutzanteil des Meßsignals isolierten Rauschspektrums des Meßsignal eine Spektralanalyse des Rauschanteils durchgeführt.

Die Erfindung basiert dabei auf der überraschenden Erkenntnis, daß Störpotentiale der beschriebenen Art zwar üblicherweise in einem in hohen Maße nicht determiniert auftreten, dennoch besonders die Rauschanteile, also die vom für die Erzeugung der primären Meßwerte eigentlich benötigten Nutzanteil des Meßsignals isolierten Signalbestandteile, zumindest im Spektralbereich zumeist einen typischen Verlauf bzw. eine typische Form aufweisen, während das gesamte Spektrum des Meßsignals, hie als Nutz-Rauschspektrum bezeichnet, Störungen der in Rede stehenden Art nur in sehr untergeordnetem, unzureichendem Maße widerspiegeln. Basierend auf dem Rauschspektrum kann somit im Betrieb zumindest das Auftreten einer für die primäre Messung schädlichen Störung sicher detektiert und insoweit On-Line eine Identifizierung eines momentanen Strömungstyps vorgenommen werden.

Das Verfahren der Erfindung und weitere Vorteile werden nun anhand von in den Figuren der Zeichnung dargestellten Zeitdiagrammen und schematisierten Schaltbildern eines magnetisch-induktiven Durchflußmessers näher erläutert.
Fig. 1a, b zeigen schematisch und teilweise in der Form eines Blockschaltbilds einen für den Ablauf des Verfahrens der Erfindung geeignetes - hier magnetisch-induktiver Durchflußmeßgerät ausgebildetes - Prozeß-Meßgerät,
Fig. 2a zeigt schematisch ein Zeitdiagramm eines im Betrieb des Prozeß-Meßgeräts gemäß Fig. 1a, 1b fließenden Erregerstroms;
Fig. 2b, c; zeigen schematisch Zeitdiagramme von im Betrieb des
Fig. 3a, b; Prozeß-Meßgeräts gemäß Fig. 1a, 1b meßbaren Potentialen;
Fig. 4a, b;
Fig. 5a, b

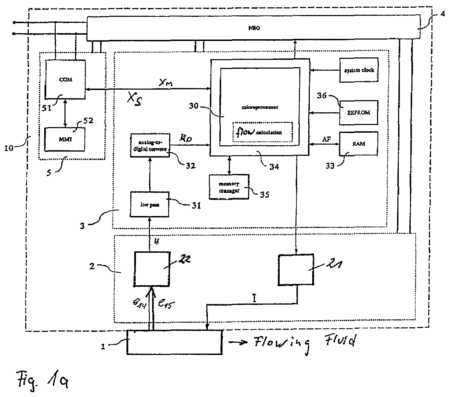

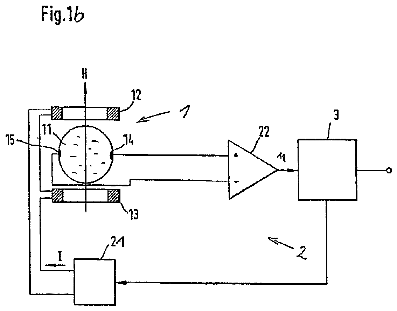

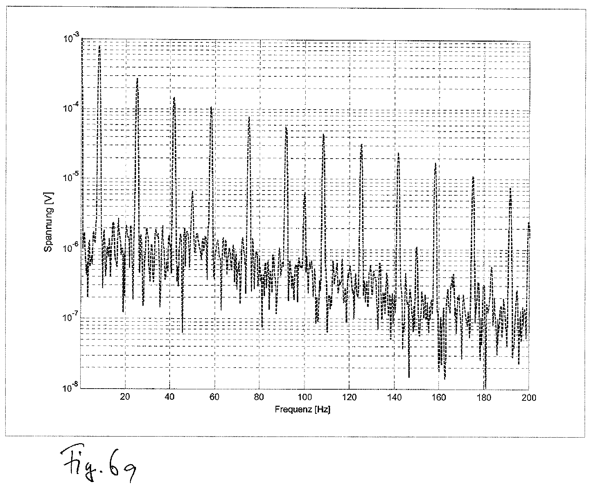

Fig. 6a zeigt ein Nutz-/Rauschspektrum, das anhand eines mittels eines Meßgeräts gemäß Fig. 1a, 1b erzeugten Meßsignals gewonnen wurde;

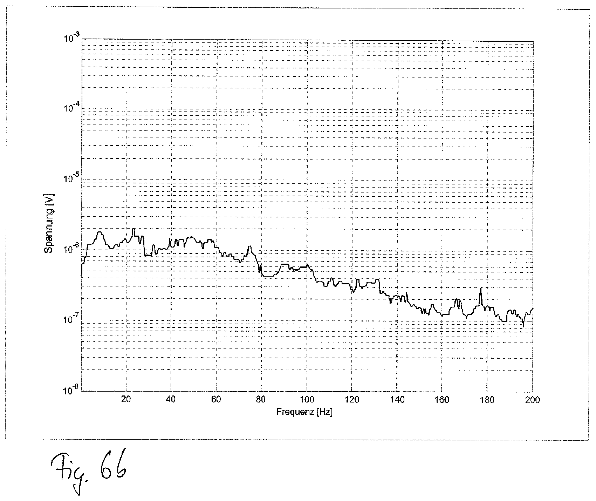

Fig. 6b zeigt ein Rauschspektrum, das anhand einer Medianfilterung des Nutz-/Rauschspektrum gemäß Fig. 6b gewonnen wurde;

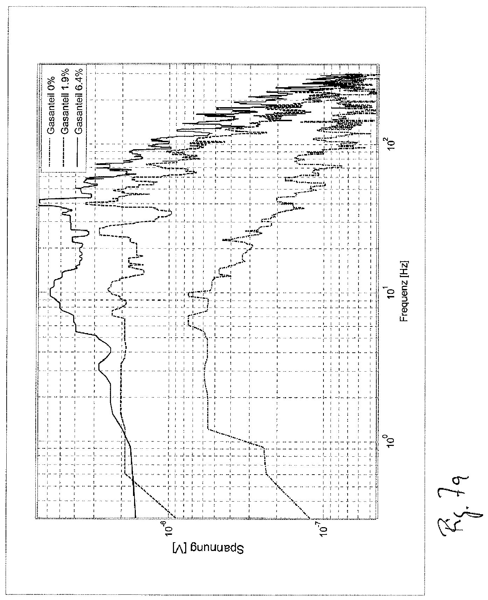

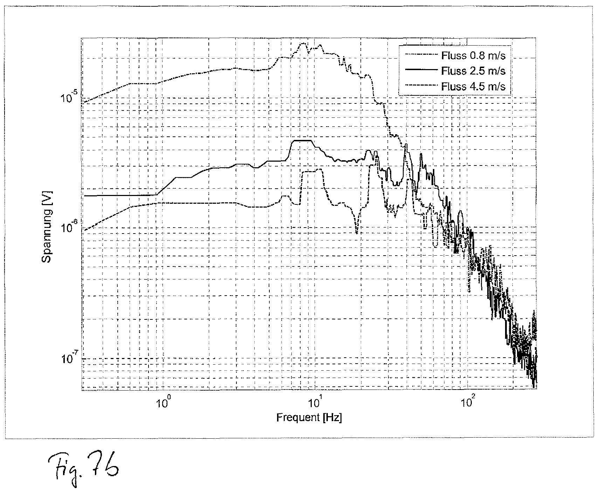

Fig. 7a, b zeigen jeweils in einer Zusammenschau verschiedene Rauschspektren, die anhand von mittels eines Meßgeräts gemäß Fig. 1a, 1b erzeugten Meßsignalen für verschiedene Strömungstypen gewonnen wurden; und

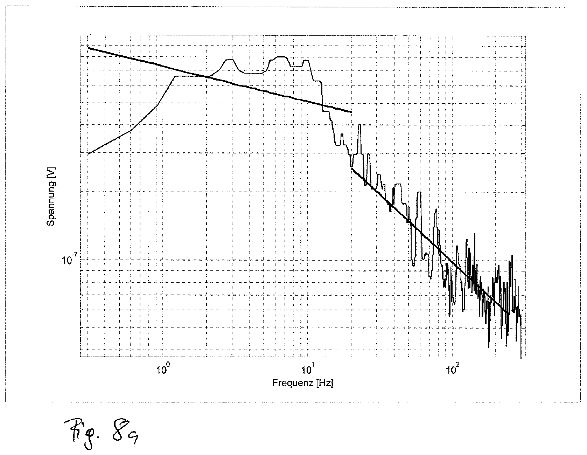

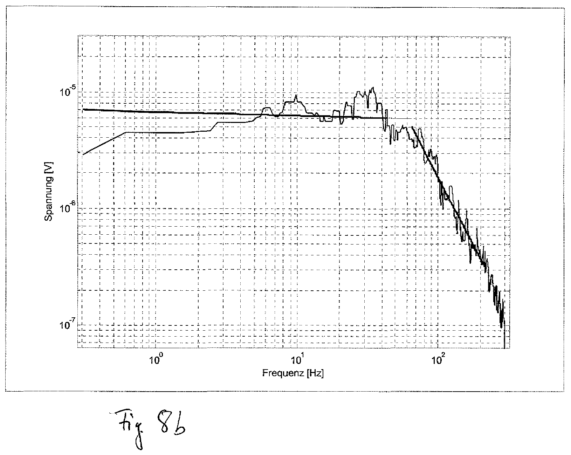

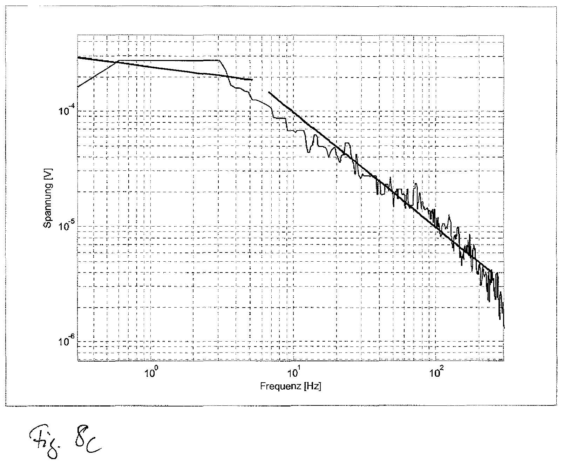

Fig. 8a, b, c zeigen schematisch Ausgleichskurven, eingepaßt in Rauschspektren, , die anhand von mittels eines Meßgeräts gemäß Fig. 1a, 1b erzeugten Meßsignalen für verschiedene Strömungstypen gewonnen wurden.

In Fig. 1a und b ist schematisch und teilweise in der Form eines Blockschaltbilds ein für den Ablauf des Verfahrens der Erfindung geeignetes - hier als magnetisch-induktiver Durchflußmeßgerät ausgebildetes - Prozeß-Meßgerät dargestellt, mittels dem zumindest eine physikalische Meßgröße eines in einer - hier nicht gezeigten - Rohrleitung strömenden, insb. eines zwei- oder mehrphasigen und/oder hinsichtlich einer Zusammensetzung und/oder eines Strömungsprofils veränderlichen, Mediums erfaßt werden kann. Beispielsweise kann das Durchflußmeßgerät dazu verwendet werden, als einen Volumendurchfluß und/oder eine Strömungsgeschwindigkeit einer mit Gas beladenen elektrisch leitenden Flüssigkeit, eines Schlamms oder einer Paste zu messen und dafür entsprechend repräsentative Primär-Meßwerte X_{M} zu ermitteln. Im besonderen ist das Meßgerät zudem aber auch dafür vorgesehen, zumindest zeitweise einen einen Strömungstyp des im Meßrohr befindlichen Mediums, der durch ein momentanes Strömungsprofil und/oder eine momentane Zusammensetzung des strömenden Mediums bestimmt ist, zu ermitteln und in einen geeigneten, insoweit als Sekundär-Meßwert dienenden Zustandswert X_{S} abzubilden. Das Meßgerät kann im übrigen an einen - hier nichtdargestellten - Feldbus angeschlossen und so mit einer entfernten Meßwarte und mit einer externen Energieversorgung verbunden sein. Zum Senden von Meßgerätdaten, insb. auch des Primär-Meßwerts, an den Feldbus kann im Meßgerät des weiteren eine entsprechende Kommunikationseinheit 5 mit entsprechenden Datenschnittstellen 51 vorgesehen sein. Ferner kann die Kommunikationseinheit 5 auch, insb. zum Visualisieren von Meßgerätedaten und/oder um ein Einstellen des Durchflußmeßgeräts vor Ort zu ermöglichen, eine entsprechende Anzeige- und Bedieneinheit 52 aufweisen.

Das Meßgerät umfasst des weiteren einen Durchflußaufnehmer 1 zum Erzeugen von mit der zu messenden physikalischen Größe korrespondierenden Meßpotentialen, eine Betriebsschaltung 2 zum Erfassen der Meßpotentiale und zum Erzeugen wenigstens eines mit der physikalischen Größe korrespondierenden Meßsignals sowie eine Auswerteschaltung 3. Diese dient dazu, die Betriebsschaltung 2 und somit auch den Durchflußaufnehmer 1 anzusteuern sowie unter Verwendung des wenigstens einen Meßsignals die physikalischen Größe quantitaiv repräsentierenden Primär-Meßwerte, insb. den momentanen Volumendurchfluß und/oder die momenatne Strömungsgeschwindigkeit, zu erzeugen. Die Betriebsschaltung 2, ggf. auch einige Komponenten des Durchflußaufnehmers 1 können beispielsweise, wie auch in Fig. 1a schematisch angedeutet, in einem Elektronikgehäuse 10 des Durchflußmessers untergebracht sein.

Zum Durchflußaufnehmer 1 gehört ein in den Verlauf der erwähnten Rohrleitung einsetzbares Meßrohr 11, das eine Rohrwand aufweist und durch das im Betrieb in Richtung einer Meßrohrlängsachse das zu messende Medium strömen gelassen wird. Ferner umfaßt der Durchflußaufnehmer 1 ein am Meßrohr angeordnetes, insb. auch direkt daran befestigtes, Magnetfeld-System zum Erzeugen eines das Medium im Meßrohr zumindest abschnittsweise mit zeitlich veränderlicher Intensität durchdringenden, insb. getakteten, Magnetfelds, wobei infolgedessen im strömenden Medium zumindest zeitweise, insb. taktweise, eine entsprechende Meßspannung induziert wird.

Zur Vermeidung eines Kurzschließens von im Fluid induzierten Spannungen ist ein das Fluid berührendes Innenteil des Meßrohrs 11 elektrisch nicht-leitend ausgeführt. Metall-Meßrohre sind dafür üblicherweise innen mit einer elektrisch nicht-leitenden Schicht, z.B. aus Keramik, Hartgummi, Polyurethan, Polyfluorethylen etc., versehen und auch i.a. nicht-ferromagnetisch; bei vollständig aus einem Kunststoff oder aus einer Keramik, beispielsweise aus Aluminiumoxid-Keramik, bestehenden Meßrohren ist die elektrisch nichtleitende Schicht demgegenüber nicht erforderlich.

Eine von einer in der Betriebsschaltung 2 vorgesehenen Treiber-Elektronik 21 angesteuerte Erregeranordnung des Durchflußmessers weist im gezeigten Ausführungsbeispiel eine am Meßrohr 11 angeordnete erste Feldspule 12 und eine am Meßrohr 11 angeordnete zweite Feldspule 13 auf. Die Feldspulen 12, 13 liegen auf einem ersten Durchmesser des Meßrohrs 11. Die Erregeranordnung dient im Betrieb der Erzeugung eines die Rohrwand und das hindurchströmende Fluid durchsetzenden Magnetfelds H. Dieses entsteht, wenn in den, hier in Reihe geschalteten, Feldspulen 12, 13 ein von der Treiber-Elektronik 21 getriebener Erregerstrom I fließen gelassen wird. Der, insb. bi-polar, Erregerstrom I kann hierbei z.B. rechteck-, dreieck- oder sinus-förmig ausgebildet sein. In Fig. 1b ist gezeigt, daß die Feldspulen 12, 13 keinen Kern enthalten, also so genannte Luftspulen sind. Die Feldspulen 12, 13 können jedoch auch, wie bei derartigen Spulenanordnungen üblich, um einen Kern gewickelt sein, der i.a. weichmagnetisch ist, wobei die Kerne mit Polschuhen zusammenwirken können, vgl. z.B. die US-A 55 40 103.

Die im gezeigten Ausführungsbeispiel als elektromagnetisch auf das Medium wirkende Spulenanordnung ausgebildet Erregeranordnung ist hier so ausgeführt, insb. sind die beiden Feldspulen 12, 13 so geformt und dimensioniert, daß das damit erzeugte Magnetfeld H innerhalb des Meßrohrs 11 zumindest bezüglich eines zum ersten Durchmesser senkrechten zweiten Durchmessers symmetrisch, insb. rotationssymmetrisch, ausgebildet ist.

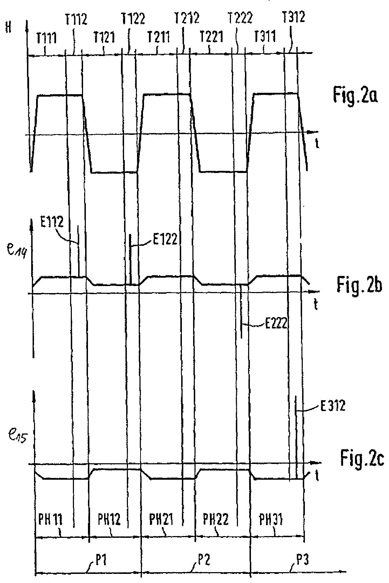

Nach einer Ausgestaltung der Erfindung wird mittels der Treiber-Elektronik 21 ein, insb. auf konstante Amplitude geregelter, Gleichstrom erzeugt, der dann mittels eines entsprechenden, beispielsweise in H- oder T-Schaltung konfigurierten, Schaltwerks periodisch, beispielsweise mit einer Taktfrequenz im Bereich zwischen 10 Hz und 50 Hz, umgeschaltet und so zu einem Wechselstrom mit geregelter Amplitude moduliert wird. Infolgedessen wird also der Erregerstrom I so durch die Spulenanordnung fließengelassen, daß die Spulen 12, 13, wie in Fig. 2a schematisch dargestellt, während einer ersten Schaltphase PH11 jeweils in einer ersten Stromrichtung und während einer auf die erste Schaltphase folgenden zweiten Schaltphase PH12 jeweils in einer zur ersten Stromrichtung umgekehrten Gegenrichtung durchflossen sind, vgl. zu Stromregelung und -umpolung z.B. auch die US-A 44 10 926 oder die US-A 60 31 740. Auf die zweite Schaltphase PH12 folgt eine dritte Schaltphase PH21, während der der Erregerstrom I wieder in der ersten Stromrichtung fließt. Auf die dritte Schaltphase folgt eine vierte Schaltphase PH22, während der der Erregerstrom I wieder in der Gegenrichtung fließt. Darauf folgt eine entsprechende Schaltphase PH31 u.s.w. Bezüglich der Umkehrung der Richtung des Erregerstroms I bilden jeweils zwei der aufeinanderfolgenden Schaltphasen eine Umschaltperiode P1, P2, P3 u.s.w. Einhergehend mit der Umpolung des die Spulenanordnung durchfließenden Erregerstroms I, abgesehen von einer allfälligen Schaltphasenverschiebung im wesentlichen synchron dazu wird auch das Magnetfeld H wiederholt umgepolt, vgl. hierzu Fig. 2a.

Zum Erzeugen wenigstens eines mit der Meßgröße korrespondierenden elektrischen Meßsignals ist ferner eine am Messrohr oder zumindest in dessen Nähe angeordnete Sensoranordnung im Messaufnehmer vorgesehen, die die im Medium zumindest zeitweise induzierte Meßspannung abgreift. In Anbetracht dessen, daß das Meßgerät, wie bereits erwähnt, besonders auch für strömende Medien, die hinsichtlich ihres Strömungsprofil und/oder ihrer Zusammensetzung veränderlich, insb. auch zwei- oder mehrphasig ausgebildet, sein können, ist davon auszugehen, daß das Meßsignal sowohl einen im wesentlichen mit einer momentanen Strömungsgeschwindigkeit des Mediums korrespondierenden Nutzanteil als auch einen zumindest anteilig von aktuellen, insb. auch strömungstypbedingten, Störungen im strömenden Medium beeinflußten Rauschanteil aufweist.

Nach einer Ausgestaltung der Erfindung weist die Sensoranordnung praktisch direkt am Messrohr angebrachte Elektroden auf. Eine an einer Innenseite der Rohrwand des Meßrohrs 11 angeordnete erste Elektrode 14 dient dabei dem Abgriff eines vom Magnetfeld H induzierten ersten Potentials e₁₄. Eine in der gleichen Weise angeordnete zweite Elektrode 15 dient ferner dem Abgriff eines vom Magnetfeld induzierten zweiten Potentials e₁₅. Die Meßelektroden 14, 15 liegen auf dem zum ersten Durchmesser und zur Meßrohlängsachse senkrechten zweiten Durchmesser des Meßrohrs 11, sie können aber z.B. auch auf einer zum zweiten Durchmesser parallelen Sehne des Meßrohrs 11 liegen, vgl. hierzu auch die US-A 56 46 353. Im hier gezeigten Ausführungsbeispiel sind die Meßelektroden 14, 15 als galvanische Messelektroden gezeigt, also als solche, die das Fluid berühren. Es können jedoch auch zwei kapazitive, also z.B. innerhalb der Rohrwand des Meßrohrs 11 angeordnete, Meßelektroden verwendet werden. Jede der Meßelektroden 14, 15 greift für sich ein elektrisches Potential e₁₄, e₁₅ ab, das im Betrieb aufgrund des Faraday-Gesetzes im hindurchströmenden Fluid induziert wird.

Wie in der Fig. 1b schematisch dargestellt sind die Meßelektroden 14, 15 im Betrieb zumindest zeitweise mit einem invertierenden bzw. nicht-invertierenden Eingang eines Differenzverstärkers 22 verbunden. Somit wird eine als Meßsignal u dienende Potentialdifferenz der beiden von den Meßelektroden 14, 15 abgegriffenen Potentiale e₁₄, e₁₅ gebildet, das mit einer im hindurchströmenden Fluid aufgebauten Meßspannung und somit auch mit der zu messenden physikalischen Größe korrespondiert. Die an den Meßelektroden 14, 15 anliegenden Potentiale e ₁₄, e₁₅ liegen üblicherweise etwa im Bereich von 10 mV bis 100 mV.

Zum Ermitteln der wenigstens einen zu erfassenden Meßgröße wie auch des Strömungstyps des im Meßrohr momentan befindlichen Mediums wird die im Medium induzierte Meßspannung mittels eines von einer ersten und einer zweiten Meßelektrode gebildeten Elektrodenpaars zumindest zeitweises, insb. taktweises, abgegriffen und in ein mit der Meßspannung entsprechend korrespondierenden analoges Meßsignal konvertiert.

Das im gezeigten Ausführungsbeispiel ausgangs des Differenzverstärkers 22 anliegende Meßsignal u wird dazu, wie aus Fig.1a, 1b ersichtlich, der im Durchflußmeßgerät vorgesehenen Auswerteschaltung 3 zugeführt. Es sei an dieser Stelle allerdings darauf hingewiesen, daß anstelle eines dem Erzeugen eines analogen Differenzsignals dienenden einzigen Differenzverstärkers für die Meßelektroden 14, 15 selbstverständlich auch separat für jede der Meßelektroden 14, 15 ein entsprechender Signalverstärker vorgesehen werden kann. Dementsprechend kann beispielsweise auch Potentialdifferenz der beiden von den Meßelektroden 14, 15 abgegriffenen Potentiale e₁₄, e₁₅ anhand zweier separat digitaliserter Meßsignale und numerisch berechnet werden.

Erfindungsgemäß dient die Auswerteschaltung 3 insb. dazu, das zugeführte Meßsignal u zu digitalisieren und abschnittsweise inform eines ersten Datensatzes DS₁ abzuspeichern, so daß zur Ermittlung des Meßwerts X_{M} eine Information über den zeitlichen Verlauf eines Abschnitts des Meßsignals u in digitaler Form zur Verfügung gehalten wird. Zu diesem Zweck ist das Meßsignal u der Auswerteschaltung 3, wie in Fig. 1a schematisch dargestellt, im gezeigten Ausführungsbeispiel über ein Tiefpaßfilter 31 von vorgebbarer Filterordnung, z.B. einem passiven oder einem aktiven RC-Filter, und von einstellbarer Grenzfrequenz zugeführt. Das Tiefpaßfilter 31 dient dazu, das Meßsignal u zur Vermeidung von Aliasing-Fehler bandzubegrenzen und somit für eine Digitalisierung entsprechend vorzuverarbeiten. Die Grenzfrequenz ist gemäß dem bekannten Nyquist-Abtasttheorem dazu auf weniger als das 0,5-fache einer Abtastfrequenz eingestellt, mit der der passierengelassene Anteil des Meßsignals u abgetastet wird. Für den Fall, daß das Meßsignal u bereits in der erforderlichen Weise bandbegrenzt ist, kann ggf. auch auf das Tiefpaßfilter 31 verzichtet werden. Ausgangsseits ist das Tiefpaßfilter 31 an einen Signaleingang eines A/D-Wandlers (Analog-zu-Digital-Wandler) 32 der Auswerteschaltung 3 gekoppelt, der dazu dient, das via Tiefpaßfilter 31 zugeführte Meßsignal u in ein dieses repräsentierendes, digitales Meßsignal u_{D} umzuwandeln. Als A/D-Wandler 32 können hierzu dem Fachmann bekannte, z.B. seriell- oder parallel-umsetzende, A/D-Wandler verwendet werden, die mit der oben erwähnten Abtastfrequenz getaktet werden können. Ein dafür geeigneter A/D-Wandlertyp ist z.B. der eines Delta-sigma A/D Converters ADS 1252 von Texas Instruments Inc. mit einer Auflösung von 24 Bit und einer zulässigen Abtastfrequenz von kleiner gleich 40 kHz, wobei zur Realiserung des erfindungsgemäßen Verfahrens durchaus Abtastfrequenzen von kleiner 10 kHz ausreichend sein können. Für den Fall, daß der verwendete A/D-Wandler 32, wie z.B. vorgenannter ADS 1252, zum Umformen von ausschließlich positiven Signalwerten vorgesehen ist, ist eine Referenzspannung des A/D-Wandlers 32, entsprechend so einzustellen, daß ein zu erwartender minimaler Signalwert eingangs des Wandlers wenigstens ein Bit, insb. das höchste signifikante Bit (MSB), des Meßsignals u_{D} setzt. Anders gesagt, dem ausgangs des Tiefpaßfilters 31 anliegenden Signal ist ein Gleichanteil so aufzuaddieren, daß es auf den A/D-Wandler 32 praktisch als ein Gleichsignal von veränderlicher Amplitude wirkt. Darüberhinaus kann es im weiteren auch von Vorteil sein, auch das digitalen Meßsignals u_{D} nochmals zu Filtern, beispielsweise mittels digitaler FIR- und/oder IIR-Filter.

Das ausgangsseits des A/D-Wandlers 32 anliegende, gegebenenfalls nochmals digital gefilterte, digitale Meßsignal u_{D} wird, z.B. via internen Datenbus, segmentsweise in einen flüchtigen Datenspeicher 33 der Auswerteschaltung 3 geladen und dort als eine das Meßsignal u momentan repräsentierende endliche Abtastfolge AF inform eines Ensembles von digital gespeicherten Meßdaten, insb. für einen digitalen Durchflußrechner 34 der Auswerteschaltung 3, verfügbar gehalten. Als Datenspeicher 33 können hierbei z.B. statische und/oder dynamische Schreib-Lese-Speicher dienen.

Eine Breite für ein momentanes Abtastfenster, also eine zeitliche Länge des abzuspeichernden, momentan das Meßsignal u repräsentierenden Abschnitts der Abtastfolge AF kann beispielsweise im Bereich der gesamten Dauer einer der Umschaltperioden P1, P2 liegen, mit der der Erregerstrom I getaktet ist oder auch im Bereich der Dauer einer der Schaltphasen PH11, PH12, PH21, PH22, wobei die Taktung, mit der in den Datenspeicher 33 eingelesen wird, dementsprechend auch im wesentlichen phasengleich zur Taktung des Erregerstroms ist. Übliche Taktzeiten liegen bei herkömmlichen Durchflußmesern der beschriebenen Art etwa im Bereich von 10 bis 100 ms, was wiederum bei einer Abtastfrequenz fₐ A/D-Wandlers 32 von 10 kHz jeweils eine Anzahl von 100 bis 1000 Samples, also 1000 abgespeicherten Abtastwerten von der Abtastfolge AF bzw. den ersten Datensatz ergeben würde.

Falls erforderlich, beispielsweise bedingt durch eine geringere Speicherkapazität des Datenspeichers 33 oder zur vorgelagerten Eliminierung von feldumkehrbedingten Spannungstransienten, ist es auch möglich, nur ein Anteil des pro Schaltphase erzeugten Meßsignals u, vielmehr des digitalen Meßsignals u_{D} in den Datenspeicher 33 einzulesen. Zur Veranschaulichung sind dazu die oben erwähnten Schaltphasen PH11, PH12, PH21, PH22, PH31 jeweils in eine zugehörige, dem Magnetfeldaufbau dienende erste Teil-Periodendauer T111, T121, T211, T221, T311 und in eine zugehörige, als Meßphase dienende zweite Teil-Periodendauer T112, T122, T212, T222, T312 unterteilt, vgl. die Fig. 2a, 2b und 2c. Vorzugsweise wird bei dieser Ausgestaltung der Erfindung jeweils immer nur im zur jeweils aktuellen zweite der Teil-Periodendauern T112, T122, T212, T222 oder T312 zugehörigen Verlauf des Meßsignals u im Datenspeicher 33 virtuell abgebildet, wobei die Auswertung der Meßdaten und die Erzeugung des Meßwerts dann jeweils während der nächsten Magnetfeldaufbauphase T121, T211, T221, T311 erfolgen kann.

Zum Erzeugen des Meßwerts X_{M} aus der Abtastfolge AF hat der Durchflußrechner 34, z.B. via internen Datenbus, zumindest temporär einen, insb. Daten lesenden, Zugriff auf den Datenspeicher 33 und die darin abgelegten Datensätze. Der Durchflußrechner 34 kann z.B., wie in Fig. 1a schematisch dargestellt, in vorteilhafter Weise mittels eines Mikroprozessors 30 und in diesem ablaufender Rechenprogramme realisiert sein. Alternativ oder in Ergänzung zum Mikroprozessor kann aber auch ein digitaler Signalprozessor zur Realiserung des Durchflußrechners dienen.

Nach einer Ausgestaltung der Erfindung umfaßt die Auswerteschaltung 3 ferner einen als separate Teilschaltung ausgeführten Speichermananger 35, der mit dem Mikroprozessor 30, z.B. via internen Datenbus, kommunizierend dazu dient, den Datenspeicher 33 zu verwalten, insb. das Sampling des digitalen Meßsignals u_{D} und das Erzeugen der Abtastfolge AF zu steuern, und somit den Mikroprozessor 30 zu entlasten. Der Speichermananger 35 kann z.B. in einen programmierbaren Funktionsspeicher, z.B. ein PAL (programmable array logic) oder ein FPGA (field programmable gate array), implementiert sein. Falls erforderlich, kann der Speichermananger 35 aber auch mittels des Mikroprozessors 30 oder eines weiteren, hier nicht gezeigten, Mikroprozessors und entsprechenden, darin ablaufenden Rechenprogrammen realisiert sein. Mittels des Speichermanangers 35 kann zur weitern Entlastung des Mikroprozessors z.B. auch eine für derartige Durchflußmeßgeräte übliche Mittelwert- oder Medianbildung über mehrere Abtastfolgen realisiert werden.

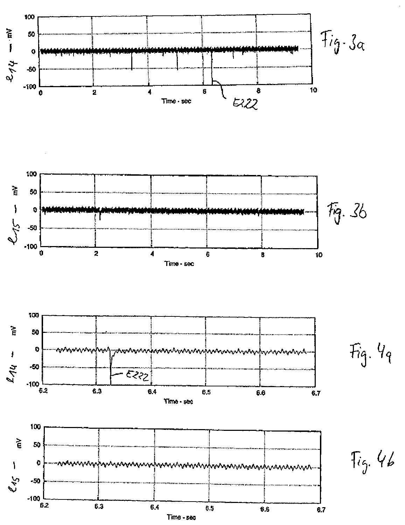

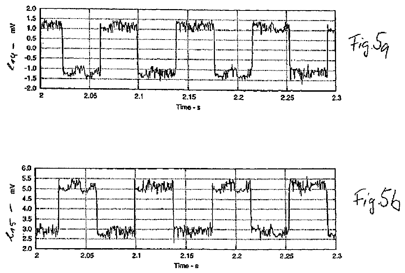

Wie bereits mehrfach erwähnt kann das Meßsignal u aufgrund von an den Meßelektroden 14, 15 auftretenden Störpotentialen E112, E122, E222, E312 in erheblichem Maße gestört und somit verfälscht sein, vgl. hierzu auch Fig. 2b, 2c. Zur Veranschaulichung sind ferner in den Fig. 3a, 3b über etwa 10 Sekunden aufgenommene Verläufe der Potentiale e₁₄, e₁₅ dargestellt, die zeitweise von Störpotentialen überlagert sind, wobei ein in der beschriebenen Weise gestörter Bereich der aufgenommenen Potentialverläufe e₁₄, e₁₅ in den Fig. 4a, 4b nochmals in einem anderen Zeitmaßstab gezeigt sind; im Vergleich dazu sind in den Fig. 5a, 5b praktisch ungestörte Bereiche der in Fig. 3a bzw. 3b gezeigten Potentialverläufe e₁₄, e₁₅ nochmals dargestellt, während in Fig. 6a ein anhand eines deratigen Meßsignals aufgenommnes Spektrum gezeigt ist.

Untersuchungen, durchgeführt an solchen mittels magnetisch-induktiver Durchflußaufnehmer gewonnenen Meßsignalen, haben für eine Vielzahl von Anwendungsfällen ergeben, daß der Strömungstyp des im Meßrohr befindlichen Mediums basierend auf dem Rauschanteil des Meßsignals zumindest zum Zwecke einer Alarmgenerierung ausreichend genau ermittelt werden kann. Weiterführende Untersuchungen haben ferner gezeigt, daß für eine Vielzahl von strömungstybedingten Störpotentialen Nutz- und Rauschanteil des Meßsignals im diskreten Spektralbereich, ausgehend vom Nutz-/Rauschspektrum, überraschend einfach voneinander separiert werden können, zumindest insoweit, daß, wie in Fig. 6b exemplarisch gezeigt, ein vom Nutzanteil weitgehend isoliertes Rauschspektrum direkt vom Nutz-/ Rauschspektrum abgeleitet werden kann. Der Frequenzbereich, der für die Strömungstypbestimmung bedeutsam ist, liegt dabei etwa zwischen 0 bis 500Hz. Damit einhergehend kann beispielsweise die Ermittlung des Strömungstyps auch unabhängig von der Ermittlung des Meßwerts basierend auf dem extrahierten, digital vorliegenden Rauschanteil durchgeführt werden. Desweiteren konnte ermittelt werden, daß eine Signalleistung des Rauschanteils - im Frequenzbereich beispielsweise veranschaulicht durch dessen spektrale Amplitudendichte oder auch dessen spektrale Leistungsdichte - vom momentan im Meßrohr vorherrschenden Strömungstyp signifikante Abhängigkeiten aufweist, die es durchaus ermöglichen, im Betrieb basierend auf einer momentanen spektrale Leistungsdichte einen momentanen Strömungstyp zu identifizieren, z.B. durch einen Vergleich mit verschiedenen vorab ermittelten Rauschleistungen von markanten Strömungtypen. Beispielsweise kann im Vergleich von Rauschspektren, aufgenommen mit jeweils gleichem Medium bei konstantem Durchfluß mit unterschiedlichem Gasanteil, vgl. hierzu auch Fig. 7a, oder bei variablen Durchfluß und konstanter Gasmenge, vgl. hierzu auch Fig. 7b, festgestellt werden, daß zum einen das Rauschspektrum eine ausgeprägte Grenzfrequenz aufzeigt, oberhalb der die spektrale Rauschleistung sich zu höheren Frequenzen deutlich verringert und infolgedessen zumindest im Mittel einen vorgebbaren Schwellenwert nicht mehr überschreitet, und daß zum anderen die spektrale Rauschleistung unterhalb der vorgenannten Grenzfrequenz mit zunehmender Durchflußrate zwar je Frequenzanteil immer geringer ausfällt, jedoch die Grenzfrequenz selbst zu höheren Frequenz hin verschoben ist. Insoweit weist also das Rauschspektrum ein unterhalb einer aktuellen, insb. veränderlichen und/oder vom Strömungstyp des Mediums beeinflußten, als Referenzfrequenz nutzbare Grenzfrequenz liegendes unteres Frequenzteilband, innerhalb dem der Rauschanteil einen vorgegebene Mindestpegel aktuell zumindest im Mittel überschreitet, sowie ein oberhalb der Grenzfrequenz liegendes oberes Frequenzteilband, innerhalb dem der Rauschanteil den vorgegebenen Mindestpegel aktuell zumindest im Mittel unterschreitet, auf.

In Anbetracht dessen kann somit davon ausgegangen werden, daß anhand eines spektralen Amplitudenverlaufs, insb. auch anhand einer spektralen Leistungsdichte, besonders des Rauschanteils der momentan im Meßrohr auftretende Strömungstyp insoweit detektierbar, als damit zumindest die Anwesenheit von strömungstypbedingten Störungen, gegebenenfalls sogar deren Ausmaß abgeschätzt werden können. Die auf dem Rauschspektrum basierende Schätzung des Strömungstyps kann dabei umso genauer erfolgen, desto genauer das momentan im Meßrohr hauptsächlich befindliche Medium spezifiziert ist. Zumindest für den Fall, daß das Medium als solches als bekannt angenommen werden kann, ist somit auch eine Korrektur der Strörungen des Meßsignals bzw. des daraus abgeleiteten Meßwerts ohne weiteres möglich.

Basierend auf den vorgenannten Erkenntnissen ist zum Ermitteln des wenigstens einen Strömungstyps daher vorgesehen, unter Verwendung des Digitalsignals ein zumindest überwiegend mit dem Rauschanteil des Meßsignals korrespondierendes, insb. bandbegrenztes, Rauschspektrum zu ermitteln. Des weiteren ist beim erfindungsgemäßen Meßgerät vorgesehen, unter Verwendung zumindest eines Teils des Rauschspektrums einen Zustandswert zu ermitteln, der den im Meßrohr momentan vorliegenden Strömungstyp zumindest qualitativ, insb. möglichst zeitnah, signalisiert.

Demensprechend ist ferner vorgesehen, zumindest zum Zwecke des Ermitteins des Zustandswerts basierend auf dem Rauschpektrum, Nutz- und Rauschanteil des Meßsignals voneinander entsprechend zu separieren. Gemäß der Erfindung wird dafür unter Verwendung des Digitalsignals vorab ein sowohl mit dem Rausch- als auch mit dem Nutzanteil des Meßsignals korrespondierendes, bspw. diskretes, Nutz-/ Rauschspektrum des Meßsignals zumindest für den interessierenden Fequenzbereich ermittelt (Fig. 6a), beispielsweise dadurch, daß zumindest ein Abschnitt des Digitalsignals bzw. der daraus abgleiteten Abtastfolge AF einer diskrete Fouriertransformation unterzogen wird. Basierend auf dem Nutz-/ Rauschspektrum kann das Rauschpektrum des Meßsignals beispielsweise dadurch ermittelt werden, daß ein zumindest überwiegend mit dem Nutzanteil des Meßsignals korrespondierenes Nutzspektrum des Meßsignals anhand des Digitalsignals und/oder der daraus abgeleiteten Abtasfolge AF ermittelt wird, insb. auch unter Berücksichtigung von ganzzahligen Vielfachen der Taktfrequenz der Magnetfeldsteuerung bzw. der daran gekoppelten Meßwerterzeugung im Nutz-/ Rauschspektrum. Dieses überwiegend mit dem Nutzanteil korrespondierene Nutzspektrum des Meßsignals ist vom Nutz-/ Rauschspektrum entsprechend zu entfernen. Es entspricht im in Fig. 6 gezeigten Beispiele im wesentlichen den bei der Taktfrequenz sowie den ganzzahligen Vielfachen davon jeweils lokalisierbaren exponierten Amplitudenspitzen. Das Entfernen des Nutzspektrums vom Nutz-/ Rauschspektrum erfolgt erfindungsgemäß auf sehr einfache Weise dadurch, daß das Nutz-/ Rauschspektrum einer Medianfilterung unterzogen wird.

Bei Anwendung von im Vergleich zu dem für die Strömungstybestimmung interessierenden Frequenzbereich wesentliche höhere Abtastfrequenz - durchaus üblich sind hier 10 bis gegebenenfalls mehr als 100-fach höhere Abtastfrequenzen - kann eine Abwärtstastung des digitalisierten Meßsignals u_{D} zur Verringerung der Datenrate von Vorteil sein. Ein dafür geeigneter Abwärtstaster kann beispielsweise aus einem als Halbbandfilter konfigurierten, insb. auch das Rauschspektrum weiter bandbegrenzenden, FIR-Filter höherer Ordnung (>30) nach Tschebeyscheff für das Digitalsignal u_{D} mit anschließender Reduzierung um Faktor 2 bestehen, wobei der Abwärtstaster auch wiederholt auf das reduzierte Digitalsignal angewendet werden kann. Dementsprechend würde dann auch eine entsprechend reduzierte Abtastfolge im Speicher abgelegt und fouriertransformiert werden.

Anhand des, insb. separiert vorliegenden, Rauschspektrums kann nunmehr eine automatische Detektion im Sinne des Erkennens der Anwesenheit eines vorbestimmten Strömungstyps und/oder auch im Sinne einer Quantifizierung des Ausmaßes der Störung, gegebenefalls auch deren Einfluß auf die Meßgenauigkeit, erfolgen. Beispielsweise können vorab an stereotypen Störungen aufgenommene, insoweit auch strömungstyprepärsentative Rauschspektren (Fig. 7a, 7b) jeweils in entsprechende mathematische Signalmodelle eingepaßt werden. Die Signalmodelle können in vorteilhafter Weise so gewählt sein, daß sie sich, in Abhängigkeit vom jeweils repräsentierten Strömungs-(stereo)-typ, lediglich in der konkreten Ausprägung ihrer jeweiligen Modellparameter voneinander unterscheiden, während sie beispielsweise hinsichtlich ihrer Ordnung gleich gestaltet sind. Solche für die On-Line-Erfassung von Strömungstypen geeigneten Signalmodelle können z.B. einfache Ausgleichskurven für das insgesamt verwendete Rauschspektrum und/oder jeweils nur einzelne ausgewählte Abschnitte des Rauschspektrums approximierende Ausgleichskurven sein. Für die in Fig. 7a, 7b exemplarisch gezeigten Rauschspekten kann, zumindest bei Verwendung sowohl dekadisch logaritmierter Frequenzwerte als auch dekadisch logaritmierter Amplitudenwerte, ein geeignetes sehr einfaches Signalmodell beispielsweise, wie auch exemplarisch in den Fig. 8a für einen Strömunsgtyp "Wasser ohne Gasanteil", in Fig. 8b für einen Strömunsgtyp "Wasser mit Gasbeladung", und in Fig. 8c für einen Strömunsgtyp "Pulpe mit Gasbeladung" gezeigt, in zwei Geradengleichungen für zwei Ausgleichsgeraden bestehen, die man mittels entsprechener Ausgleichsrechnungen, beispielsweise nach der Fehlerquadrat-Methode, in den - hier doppelt-logartimisch aufgtragenen - Spektrumsabschnitt unterhalb bzw. oberhalb der erwähnten Grenzfrequenz gelegt sind.

Demgemäß ist nach einer weiteren Ausgestaltung der Erfindung vorgesehen zum Ermitteln des wenigstens einen Zustandswerts wenigstens eine aktuelle Referenzfrequenz für das Rauschspektrum zu ermitteln. Referenzfrequenz kann beispielsweise die erwähnte Grenzfrequenz sein, oberhalb der das Rauschspektrum einen vorgegebene Schwellenwert für die spektralen Amplitudenwerte zumindest im Mittel nicht mehr überschreitet. Als weiterer für die Bestimmung des momentanen Zustandswert geeigneten Modell-Parameter kann ferner ein Gradientenwert für das Rauschspektrum dienen, der eine frequenzabhängige Veränderung zumindest eines, insb. oberhalb der Grenzfrequenz gelegenen, Abschnitts einer spektralen Amplitudendichte des Rauschanteils repräsentiert. Für die in den Fig. 7a, 7b gezeigten Rauschspektren kann als Gradientewert beispielsweise eine Steigung der oberhalb dieser Grenzfrequenz verlaufenden Ausgleichskurve verwendet werden, vgl. hierzu auch die Fign. 8a, 8b oder 8c. Alternativ oder in Ergänzung zu Referenzfrequenz und/oder Gradientewert kann beispielsweise auch eine mittlere spektrale Leistungsdichte des unteren und/oder des oberen Frequenzbandes als ein Modell-Parameter für das jeweilige Frequenzband dienen. Demgemäß ist zur Ermittelung des wenigstens einen Zustandswerts nach einer weiteren Ausgestaltung der Erfindung ferner vorgesehen, eine spektralen Leistungsdichte, zumindest des Rauschanteils des Meßsignals zu bestimmen, insb. auch unter Verwendung wenigstens eines Teils des Rauschspektrums. Als für die On-Line-Detektion des aktuellen Strömungstyps gut geeigneter Modell-Parameter hat sich hierbei ein als Rauschzahl bezeichneter Formfaktor gezeigt, der einer spektralen Signalleistung des Rauschanteils für dessen unterhalb der Grenzfrequenz liegenden Frequenzanteile entspricht. In Anbetracht dessen, daß die momentane Grenzfrequenz des Rauschspektrum, wie bereits erwähnt, in gewisseme Maße auch vom momentanen Durchfluß abhängig ist, kann des weiteren auch die aktuelle Referenzfrequenz bezogen auf den aktuellen Durchflußmeßwert als Indikator für den momenatne Strömunsgtyp dienen.

Nach einer weiteren Ausgestaltung der Erfindung ist ferner vorgesehen, zum Ermitteln des wenigstens einen Zustandswerts weiters für das oberhalb der Referenzfrequenz liegende obere Frequenzteilband wenigstens einen Modell-Parameter zu ermitteln, der das obere Frequenzteilband vom unteren Frequenzteilband unterscheidbar repräsentiert. Nach einer Weiterbildung der Erfindung wird zusätzlich zu dem das obere Frequenzteilband repräsentierenden Modell-Parameter auch für das unterhalb der unteren Referenzferquenz liegende untere Frequenzteilband wenigstens ein Modell-Parameter ermittelt. In vorteilhafter Weise können die die beiden Frequenzbänder repräsentierenden Modell-Parameter typgleich ausgebildet sein, so daß sie direkt miteinander verglichen werden können. Alternativ oder in Ergänzung kann zum Ermittelns des wenigstens einen Zustandswerts auch wenigstens ein solcher Modell-Parameter für das Meßsignal verwendet werden, der eine Signaleigenschaft des Rauschanteils innerhalb des gesamten Rauschspektrums aktuell repräsentiert, beispielsweise eine Signalleistung des gesamten Rauschspektrums.

Das Auftreten von Gasblasen in wäßrigen Flüssigkeiten als ein durchaus häufiger vorkommender Strömungstyp kann anhand vorgenannter Modell-Parameter beispielsweise dadurch auf einfache Weise detektiert werden, daß die im Betrieb für das Meßsignal momentan ermittelte Rauschzahl wie auch der Gradientenwert jeweils mit einem zugehörigen, für diesen Zustand vorherbestimmten sigifikanten Referenzwert verglichen wird. Für den Fall, daß die Rauschzahl größer als eine vorherbestimmte Mindestrauschzahl und der Gradientenwert kleiner als ein vorherbestimmter Höchstgradientenwert sind, kann somit von Gasblasen im Medium ausgegangen und insoweit ein dies entsprechend signaliserender Zustandswert ausgegeben werden. Dies im besonderen auch dann, wenn die Grenzfrequenz die oben beschriebene Abhängigkeit vom Durchfluß aufzeigt, beispielsweise repräsentiert durch ein kaum oder nur in geringem Maße schwankendes Verhältnis der aktuellen Referenzfrequenz bezogen auf den aktuellen Durchflußmeßwert. Demgemäß ist nach einer weiteren Ausgestaltung der Erfindung ferner vorgesehen, den Zustandswert anhand eines Vergleiches wenigstens eines Modell-Parameters für das Rauschspektrum mit mit einem dafür entsprechend vorgegebenen Gesamtrausch-Referenzwert zu ermitteln, insb. unter Verwendung der aktuellen Referenzfrequenz und des das obere Frequenzteilband repräsentierenden, insb. inform eines Gradientenwerts oder einer mittleren spektralen Leistungsdichte des oberen Frequenzbandes vorliegenden, Modell-Parameters. Ferner wird der Zustandswert nach einer Weiterbildung der Erfindung auch unter Berücksichtigung des aktuellen und/oder eines zuvor ermittelten Primär-Meßwerts generiert. Anstelle des hier exeplarisch beschriebenen Falles von Gasblasen in Wasser könen auf diese Weise aber auch andere signifikante Strömungstypen On-line identifiziert werden, gegbenenfalls auch unter Berücksichtigung weiterer Modell-Parameter für Signalmodelle von höherer Ordnung. Alternativ oder in Ergänzung zu den vorgenannten, parametrischen Signalmodelle können, falls erforderlich, durchaus auch andere Klassifikatoren auf die jeweiligen Rauschspektren angewendete werden, beispielsweise auch Neuronale Netze, auf Kovarianzanalysen beruhende, multivariate Klassifikatoren oder auch Fuzzy-Netzwerke.

Je nach Interessenlage des Anwenders kann der Zustandswert und demenstprechend auch das zu dessen Ermittlung realsierte Verfahren so ausgelegt sein, daß er lediglich einige wenige diskrete, den Strömunsgtyp eher qualitativ beschreibende Werte annehmen kann. Beispielsweise kann die Ermittlung des Zustandswerts derart ausgestaltet sein, daß dieser signalisert, ob das Medium aktuell im wesentlichen einphasig und insoweit als homogen anzusehen ist, oder ob das im Meßrohr momentan befindliche Medium eher zwei- oder auch mehrphasig ist. Je nach Kenntnis des tatsächlichen Prozesses kann der Zustandswert auch signalsieren, ob das Medium wenigstens eine und/oder im wesentlichen zwei fluide Phasen aufweist. Demgemäß kann der Zustandswert beispielsweise auch signalisieren, daß das Medium zumindest eine gasförmige Phase und eine flüssige Phase aufweist. Bei genauerer Kenntnis des tatsächlichen Prozeßverhaltens kann der Zustandswert, falls erforderlich, durchaus auch in der Weise ermittelt werden, daß er das Ausmaß der Störung, beispielsweise also den Gasanteil in der Flüssigkeit, quantitaiv repräsentiert.

Darüberhinaus kann, in Kenntnis des Einflusses des detektierten Strömunsgtyps, der Zustandswert des weiteren auch dazu verwendet werden, den Einfluß des momentan im Meßrohr detektierten Strömunsgtyp auf das Meßsignal und insoweit auf die Genauigkeit des Primär-Meßwerts entsprechend zu kompensieren und somit den Primär-Meßwert genauer zu ermitteln. Dies kann z.B. dadurch realsiert werden, daß der momentan ermittelte Zustandswerts mit wenigstens einem vorgegebenen Zustandsreferenzwert, der einen, insb. für einen gesicherten Betrieb und/oder eine vorgegebene Meßgenauigkeit des Durchflußmessers erforderlichen, vorgegebenen Strömungstyp des Mediums repräsentiert, verglichen wird, und, basierend auf einem Vergleich, zumindest ein Alarm ausgelöst wird, der, insb. visuell und/oder akustisch wahrnehmbar, signalisiert, daß der aktuell ermittelte Strömungstyp vom vorgegebenen Strömungstyp abweicht. Gegebenfalls kann damit einhergehend auch die Erzeugung bzw. die Ausgabe des Primär.Meßwerts als solche zeitweise ganz unterbrochen werden.

Es sei an dieser Stelle noch erwähnt, daß sowohl die zur Erzeugung des Primären-Meßwerts wie auch zur Ermittlung des Zustandswerts erforderlichen Auswerteverfahren in der dem Fachmann bekannten Weise z.B. als im Mikroprozessor 30 ablaufendes Rechenprogramm realisiert sein können. Die dazu jeweils erforderlichen Programmcodes können ohne weiters in einem, insb. permanent, beschreibbaren Speicher 36 der Auswertstufe 3, z.B. einem EPROM, einem Flash-EEPROM oder EEPROM, implementiert werden, auf den der Mikroprozessor 30 im Betrieb Daten lesend zugreift. Ein Vorteil der Erfindung besteht insoweit auch darin, daß zur Realisierung des Verfahrens sowohl herkömmliche Durchflußaufnehmer als auch herkömmliche Betriebsschaltungen verwendet werden können. Selbst herkömmliche Auswerteschaltungen können bei entsprechender Modifikation der implementierten Software im wesentlichen weiterverwendet werden.

## Patentansprüche

1. Verfahren zum Betreiben eines magnetisch-induktiven Durchflußmessers, welches Verfahren folgende Schritte umfaßt:
- Strömenlassen eines zu messenden Mediums durch ein Meßrohr des Durchflußmessers,
- Erzeugen eines das Medium im Meßrohr zumindest abschnittsweise mit zeitlich veränderlicher Intensität durchdringenden, insb. getakteten, Magnetfelds in der Weise, daß im Medium zumindest zeitweise, insb. taktweise, eine Meßspannung induziert wird,
- zumindest zeitweises, insb. taktweises, Abgreifen der im Medium induzierten Meßspannung mittels eines von einer ersten und einer zweiten Meßelektrode gebildeten Elektrodenpaars zum Erzeugen wenigstens eines mit der Meßspannung korrespondierenden analogen Meßsignals, wobei das Meßsignal einen im wesentlichen mit einer momentanen Strömungsgeschwindigkeit des Mediums korrespondierenden Nutzanteil sowie einen zumindest anteilig von aktuellen Störungen im strömenden Medium beeinflußten Rauschanteil aufweist, und
- Ermitteln eines Strömungstyps des im Meßrohr befindlichen Mediums, der durch ein momentanes Strömungsprofil und/oder eine momentane Zusammensetzung des strömenden Mediums bestimmt ist, wobei der Schritt des Ermitteins des Strömungstyps folgende weiteren Schritte umfaßt:
-- Erzeugen eines das wenigstens eine Meßsignal repräsentierenden Digitalsignals,
-- Ermitteln eines zumindest überwiegend mit dem Rauschanteil korrespondierenden, insb. bandbegrenzten, Rauschspektrums des Meßsignals unter Verwendung des Digitalsignals, und
-- Ermitteln wenigstens eines den im Meßrohr vorliegenden Strömungstyp zumindest qualitativ, insb. möglichst zeitnah, signalisierenden Zustandswerts unter Verwendung zumindest eines Teils des Rauschspektrums,
- -wobei Schritt des Ermitteins des Rauschspektrums des Meßsignals folgende weiteren Schritte umfaßt:
-- Ermitteln eines sowohl mit dem Rausch- als auch mit dem Nutzanteil des Meßsignals korrespondierenden Nutz-/ Rauschspektrums des Meßsignals unter Verwendung des Digitalsignals und
-- Entfernen eines zumindest überwiegend mit dem Nutzanteil korrespondierenden Nutzspektrums des Meßsignals vom Nutz-/ Rauschspektrums, wobei zum Entfernen des Nutzspektrums vom Nutz-/ Rauschspektrum letzteres einer Medianfilterung unterzogen wird.

2. Verfahren gemäß Anspruch 1, wobei der Zustandswert signalisiert, daß das Medium im wesentlichen einphasig ist.

3. Verfahren gemäß Anspruch 1, wobei der Zustandswert signalisiert, daß das Medium mehrphasig ist.

4. Verfahren gemäß einem der vorherigen Ansprüche, wobei der Schritt des Ermitteins des wenigstens einen Zustandswerts einen Schritt des Ermitteins einer spektralen Leistungsdichte zumindest des Rauschanteils des Meßsignals umfaßt.

5. Verfahren gemäß einem der vorherigen Ansprüche, wobei der Schritt des Ermitteins des wenigstens einen Zustandswerts einen Schritt des Ermitteins wenigstens eines Modell-Parameters für das Meßsignal umfaßt, der eine Signaleigenschaft des Rauschanteils innerhalb des gesamten Rauschspektrums aktuell repräsentiert.

6. Verfahren gemäß dem vorherigen Anspruch, wobei der Schritt des Ermittelns des wenigstens einen Zustandswerts weiters einen Schritt des Vergleichens des Modell-Parameters mit einem dafür vorgegebenen Modell-Referenzwert umfaßt.

7. Verfahren gemäß einem der vorherigen Ansprüche, wobei das Rauschspektrum ein unterhalb einer aktuellen, insb. veränderlichen und/oder vom Strömungstyp des Mediums beeinflußten, Referenzfrequenz liegendes unteres Frequenzteilband, innerhalb dem der Rauschanteil einen vorgegebene Mindestpegel aktuell zumindest im Mittel überschreitet, sowie ein oberhalb der Referenzfrequenz liegendes oberes Frequenzteilband, innerhalb dem der Rauschanteil den vorgegebenen Mindestpegel aktuell zumindest im Mittel unterschreitet, aufweist.

8. Verfahren gemäß dem vorherigen Anspruch, wobei der Schritt des Ermitteins des wenigstens einen Zustandswerts einen Schritt des Ermittelns aktuellen Referenzfrequenz umfaßt.

9. Verfahren gemäß Anspruch 7 oder 8, wobei der Schritt des Ermittelns des wenigstens einen Zustandswerts weiters einen Schritt des Ermittelns wenigstens eines das obere Frequenzteilband vom unteren Frequenzteilband unterscheidbar repräsentierenden Modell-Parameters umfaßt.

10. Verfahren gemäß dem vorherigen Anspruch, wobei der Schritt des Ermitteins des wenigstens einen Zustandswerts weiters einen Schritt des Vergleichens des aktuellen Modell-Parameters mit einem dafür vorgebenen Referenzwert umfaßt.

11. Verfahren gemäß Anspruch 9 oder 10, wobei es sich bei dem wenigstens einen Modell-Parameter um einen Gradientenwert handelt, der eine frequenzabhängige Veränderung einer spektralen Amplitudendichte des Rauschanteils repräsentiert.

12. Verfahren gemäß Anspruch 7 oder 8 in Verbindung mit Anspruch 10 oder 11, wobei der wenigstens eine Zustandswert unter Verwendung der aktuellen Referenzfrequenz und des das obere Frequenzteilband repräsentierenden Modell-Parameters erfolgt.

13. Verfahren gemäß einem der vorherigen Ansprüche, weiters umfassend einen Schritt des Erzeugens wenigstens eines Meßwerts, der eine vom zu messenden Medium zu erfassende Meßgröße quantitativ repräsentiert, unter Verwendung des Meßsignals.

14. Verfahren gemäß dem vorherigen Anspruch,
wobei der Meßwert unter Verwendung auch des Digitalsignals erzeugt wird,
wobei der Meßwert unter Verwendung auch des Zustandswerts erzeugt wird.

15. Verfahren gemäß einem der vorherigen Ansprüche, weiters umfassend einen Schritt des Vergleichens des Zustandswerts mit wenigstens einem vorgegebenen Zustandsreferenzwert, der einen, insb. für einen gesicherten Betrieb und/oder eine vorgegebene Meßgenauigkeit des Durchflußmessers erforderlichen, vorgegebenen Strömungstyp des Mediums repräsentiert.

## Claims

1. Procedure to operate an electromagnetic flowmeter, said procedure comprising the following steps:
- A medium to be measured is allowed to flow through a measuring tube of the flowmeter,
- Generation of a magnetic field, particularly a pulsed magnetic field, that passes through the medium in the measuring tube at least in part with an intensity that changes over time in such a way that a measurement voltage is induced in the medium at least temporarily, particularly cyclically,
- Measurement of the measurement voltage induced in the medium, at least temporarily, particularly cyclically, using a pair of electrodes, formed by a first and a second measuring electrode, to generate at least one analog measuring signal that corresponds to the measurement voltage, wherein the measuring signal has a useful component that essentially corresponds to a current flow velocity of the medium and a noise component that is at least partially influenced by the current interferences in the flowing medium,
- Determination of a type of flow of the medium in the measuring tube, said type of flow being determined by a current flow profile and/or a current composition of the flowing medium, wherein the step to determine the type of flow comprises the following additional steps:
-- Generation of a digital signal representing the at least one measuring signal,
-- Determination of a noise spectrum, particularly bandwidth-limited, of the measuring signal using the digital signal, said noise spectrum corresponding at least essentially to the noise component, and
-- Determination of at least one status value that signals a flow type in the measuring tube, at least in a qualitative manner, particularly as promptly as possible, using at least a part of the noise spectrum,
-- Wherein the step involving the determination of the noise spectrum of the measuring signal comprises the following additional steps:
-- Determination of a useful/noise spectrum of the measuring signal, which corresponds to both the noise component and the useful component of the measuring signal, using the digital signal, and
-- Removal - from the useful/noise spectrum - of a useful spectrum of the measuring signal, which corresponds at least primarily to the useful component, wherein the useful/noise spectrum is subject to median filtering to remove the useful spectrum from the useful/noise spectrum.

2. Procedure as claimed in Claim 1, wherein the status value signals that the medium is essentially single-phase.

3. Procedure as claimed in Claim 1, wherein the status value signals that the medium is multi-phase.

4. Procedure as claimed in one of the previous claims, wherein the step to determine the at least one status value involves a step to determine a spectral power density at least of the noise component of the measuring signal.

5. Procedure as claimed in one of the previous claims, wherein the step to determine the at least one status value involves a step to determine at least one model parameter for the measuring signal that currently represents a signal property of the noise component within the entire noise spectrum.

6. Procedure as claimed in the previous claim, wherein the step to determine the at least one status value involves a step to compare the model parameter with a model reference value predefined for this purpose.

7. Procedure as claimed in one of the previous claims, wherein the noise spectrum has a lower frequency band, situated below a current reference frequency, particularly one which is variable and/or influenced by the type of flow of the medium, within said lower frequency band the noise component currently exceeds, at least on average, a predefined minimum level, and an upper frequency band, situated above the reference frequency, within said upper frequency band the noise component currently falls below, at least on average, the predefined minimum level.

8. Procedure as claimed in the previous claim, wherein the step to determine the at least one status value involves a step to determine the current reference frequency.

9. Procedure as claimed in Claim 7 or 8, wherein the step to determine the at least one status value further comprises a step to determine at least one model parameter that distinguishably represents the upper frequency band from the lower frequency band.

10. Procedure as claimed in the previous claim, wherein the step to determine the at least one status value further comprises a step to compare the current model parameter with a reference value predefined for this purpose.

11. Procedure as claimed in Claim 9 or 10, wherein the at least one model parameter is a gradient value, which represents a frequency-dependent change in the spectral amplitude density of the noise component.

12. Procedure as claimed in Claim 7 or 8 in connection with Claim 10 or 11, wherein the at least one status value is obtained using the current reference frequency and the model parameter representing the upper frequency band.

13. Procedure as claimed in one of the previous claims, further comprising a step to generate at least one measured value, which quantitatively represents a measured variable to be determined from the medium to be measured, using the measuring signal.

14. Procedure as claimed in the previous claim,
wherein the measured value is generated also using the digital signal,
wherein the measured value is generated also using the status value.

15. Procedure as claimed in one of the previous claims, further comprising a step to compare the status value with at least one predefined status reference value, which represents a predefined type of flow of the medium, particularly required for safe operation and/or for a predefined accuracy of the flowmeter.

## Revendications

1. Procédé destiné à l'exploitation d'un débitmètre magnéto-inductif, lequel procédé comprend les étapes suivantes :
- Écoulement d'un produit à mesurer à travers un tube de mesure du débitmètre,
- Génération d'un champ magnétique, notamment pulsé, traversant le produit dans le tube de mesure au moins partiellement avec une intensité modifiable dans le temps, de telle sorte qu'une tension de mesure est induite au moins temporairement, notamment cycliquement, dans le produit,
- Prélèvement au moins temporairement, notamment cycliquement, de la tension de mesure induite dans le produit au moyen d'une paire d'électrodes constitué d'une première et d'une deuxième électrode de mesure, laquelle paire d'électrodes est destinée à générer au moins un signal de mesure analogique correspondant à la tension de mesure, le signal de mesure présentant une composante utile correspondant pour l'essentiel avec une vitesse d'écoulement momentanée du produit, ainsi qu'une composante de bruit influencée au moins partiellement par les parasites actuels présents dans le produit en écoulement,
- Détermination d'un type d'écoulement du produit se trouvant dans le tube de mesure, lequel type d'écoulement est déterminé par un profil d'écoulement momentané et/ou par une composition momentanée du produit en écoulement, l'état de détermination du type d'écoulement comprenant les étapes supplémentaires suivantes :
-- Génération d'un signal numérique représentant l'au moins un signal de mesure,
-- Détermination, à l'aide du signal numérique, d'un spectre de bruit du signal de mesure, notamment limitant la bande, correspondant au moins essentiellement à la composante de bruit, et
-- Détermination, à l'aide d'au moins une partie du spectre de bruit, d'au moins une valeur d'état signalant au moins qualitativement, notamment le plus rapidement possible, le type d'écoulement présent dans le tube de mesure,
-- L'étape de détermination du spectre de bruit du signal de mesure comprenant les étapes supplémentaires suivantes :
-- Détermination, à l'aide du signal numérique, d'un spectre utile / de bruit du signal de mesure, lequel spectre correspond à la fois à la composante de bruit et à la composante utile du signal de mesure, et
-- Suppression dans le spectre utile / de bruit d'un spectre utile du signal de mesure correspondant au moins essentiellement à la composante utile, le spectre utile / de bruit étant soumis à un filtrage médian pour la suppression du spectre utile au sein du spectre utile / de bruit.

2. Procédé selon la revendication 1, pour lequel la valeur d'état signale que le produit est pour l'essentiel à phase unique.

3. Procédé selon la revendication 1, pour lequel la valeur d'état signale que le produit est à phase multiple.

4. Procédé selon l'une des revendications précédentes, pour lequel l'étape de la détermination de l'au moins une valeur d'état comprend une étape de détermination d'une densité de puissance spectrale au moins de la composante de bruit du signal de mesure.

5. Procédé selon l'une des revendications précédentes, pour lequel l'étape de la détermination de l'au moins une valeur d'état comprend une étape de détermination d'au moins un paramètre de modèle pour le signal de mesure, lequel modèle représente actuellement une propriété de signal de la composante de bruit au sein du spectre de bruit total.

6. Procédé selon la revendication précédente, pour lequel l'étape de la détermination de l'au moins une valeur d'état comprend une étape de comparaison du paramètre de modèle avec une valeur de référence de modèle prédéfinie à cette fin.

7. Procédé selon l'une des revendications précédentes, pour lequel le spectre de bruit présente une sous-bande de fréquence inférieure, située au-dessous d'une fréquence de référence actuelle, notamment variable et/ou influencée par le type d'écoulement du produit, sous-bande au sein de laquelle la composante de bruit dépasse actuellement par excès, au moins en moyenne, un niveau minimum prédéfini, ainsi qu'une sous-bande de fréquence supérieure, située au-dessus d'une fréquence de référence, sous-bande au sein de laquelle la composante de bruit dépasse actuellement par défaut, au moins en moyenne, un niveau minimum prédéfini.

8. Procédé selon la revendication précédente, pour lequel l'étape de détermination de l'au moins une valeur d'état comprend une étape de détermination de la fréquence de référence actuelle.

9. Procédé selon la revendication 7 ou 8, pour lequel l'étape de la détermination de l'au moins une valeur d'état comprend en outre une étape de détermination de l'au moins un paramètre de modèle représentant de façon distincte la sous-bande de fréquence supérieure et la sous-bande de fréquence inférieure.

10. Procédé selon la revendication précédente, pour lequel l'étape de détermination de l'au moins une valeur d'état comprend en outre une étape de comparaison du paramètre de modèle actuel avec une valeur de référence prédéfinie à cette fin.

11. Procédé selon la revendication 9 ou 10, pour lequel il s'agit, concernant l'au moins un paramètre de modèle, d'une valeur de gradient, qui représente une modification fonction de la fréquence d'une densité d'amplitude spectrale de la composante de bruit.

12. Procédé selon la revendication 7 ou 8 en liaison avec la revendication 10 ou 11, pour lequel l'au moins une valeur d'état est obtenue en utilisant la fréquence de référence actuelle et le paramètre de modèle représentant la sous-bande de fréquence supérieure.

13. Procédé selon l'une des revendications précédentes, comprenant en outre une étape de génération d'au moins une valeur mesurée, qui représente quantitativement une grandeur de mesure à déterminer pour le produit à mesurer, en utilisant le signal de mesure.

14. Procédé selon la revendication précédente,
pour lequel la valeur mesurée est générée en utilisant également le signal numérique,
pour lequel la valeur mesurée est générée en utilisant également la valeur d'état.

15. Procédé selon l'une des revendications précédentes, comprenant en outre une étape de comparaison de la valeur d'état avec au moins une valeur de référence d'état prédéfinie, qui représente un type d'écoulement prédéfini du produit, nécessaire notamment pour un fonctionnement sécurisé et/ou une précision de mesure prédéfinie du débitmètre.
